Europäisches Patentamt

European Patent Office

Office européen des brevets

(19)

(11) Veröffentlichungsnummer: **0 261 152 B1**

# (12) EUROPÄISCHE PATENTSCHRIFT

(45) Veröffentlichungstag der Patentschrift :
27.03.91 Patentblatt 91/13

(51) Int. Cl.⁵ : **B60R 21/13**, B60R 21/02, G01P 15/08, G01C 9/12

(21) Anmeldenummer : 87901350.6

(22) Anmeldetag : 25.02.87

(86) Internationale Anmeldenummer :
PCT/DE87/00065

(87) Internationale Veröffentlichungsnummer :
WO 87/05570 24.09.87 Gazette 87/21

(54) **VORRICHTUNG ZUM SELBSTTÄTIGEN AUSLÖSEN VON INSASSENSCHUTZVORRICHTUNGEN BEI EINEM UNFALL.**

(30) Priorität : 22.03.86 DE 3609839

(43) Veröffentlichungstag der Anmeldung :
30.03.88 Patentblatt 88/13

(45) Bekanntmachung des Hinweises auf die
Patenterteilung :
27.03.91 Patentblatt 91/13

(84) Benannte Vertragsstaaten :
DE NL SE

(56) Entgegenhaltungen :
WO-A-85/04708
DE-A- 2 131 627
FR-A- 2 316 977
US-A- 3 038 344

(73) Patentinhaber : ROBERT BOSCH GMBH
Postfach 50
W-7000 Stuttgart 1 (DE)

(72) Erfinder : CONDNE, Claus
Wadgasser Str. 65
W-6633 Wadgassen (DE)
Erfinder : DOBLER, Klaus
Bettäckerstr. 12
W-7016 Gerlingen (DE)
Erfinder : HACHTEL, Hansjörg
Buchenstr. 4
W-7251 Weissach (DE)
Erfinder : MATTES, Bernhard
Querstr. 41
W-7123 Sachsenheim 1 (DE)
Erfinder : SUCHOWERSKYJ, Wadym
Steinbockweg 12
W-7250 Leonberg (DE)

**Beschreibung**

Stand der Technik

Die Erfindung geht aus von einer Vorrichtung zum selbsttätigen Auslösen von Insassenschutzvorrichtungen in Kraftfahrzeugen bei einem Unfall nach der Gattung des Hauptanspruchs.

Es ist bekannt, einen als seismische Masse dienenden Körper elastisch außerhalb des Massemittelpunktes aufzuhängen, so daß dieses Feder-Masse-System eine Resonanzfrequenz besitzt, die oberhalb des Meßbereichs liegt Die Auslenkung der Masse ist ein Maß für die auftretenden translatorischen Beschleunigungen. Damit läßt sich mit Hilfe einer Auswerteschaltung die Insassenschutzvorrichtung in Kraftfahrzeugen aktivieren.

Ferner ist es bekannt, einen als seismische Masse dienenden Körper elastisch im Massemittelpunkt aufzuhängen, so daß dieses Feder-Masse-System eine Resonanzfrequenz besitzt, die oberhalb des Meßbereichs liegt. Die Auslenkung der Masse ist ein Maß für die auftretende Winkelbeschleunigung.

Aus der Schrift FR-A-2 316 977 bzw. der korrespondierenden DE-A-26 30 553 ist ein Beschleunigungssensor zum Auslösen von Insassenschutzvorrichtungen in Kraftfahrzeugen bekannt. Hier ist eine seismische Masse am Ende eines Pendels angeordnet, das am anderen Ende beweglich aufgehängt ist. Die seismische Masse steht in Wirkverbindung mit einer optischen Auslösevorrichtung bzw. mit einem Hall-Element. Seine Funktion ist aber auf die eines Beschleunigungsschalters begrenzt. Es ist jeweils eine bestimmte Auslöseschwelle vorgegeben, bei deren Erreichen die Insassenschutzvorrichtung, zum Beispiel eine Sperreinrichtung für einen Automatikgurt ausgelöst wird. Die Auslenkung der seismischen Masse ist somit nur ein Maß für die in einer bestimmten Richtung auftretende Beschleunigung, deren Betrag aber nicht ermittelt werden kann.

Vorteile der Erfindung

Die erfindungsgemäße Vorrichtung mit den Merkmalen des Hauptanspruchs hat demgegenüber den Vorteil, daß sie die Eigenschaften der beiden oben beschriebenen Aufnehmer in einer einfachen Vorrichtung miteinander vereint. Beide bisher getrennt gewonnenen Meßsignale können mit einer einzigen Vorrichtung erzeugt werden. Mit Hilfe dieses Sensorsignals läßt sich nach entsprechender Filterung sowohl die Lage als auch die Winkelgeschwindigkeit bestimmen. Durch Auswertung dieser Größen kann eine Fahrsituation erkannt werden, die zum Überschlag eines Kraftfahrzeugs führt. Alle notwendigen Schutzmaßnahmen, z.B. Ausfahren eines Überrollbügels, lassen sich dadurch rechtzeitig auslösen. Es ist auch möglich, zusätzliche Schutzeinrichtungen zeitlich nacheinander zu aktivieren. Die Vorrichtung baut einfach und robust und ist für den Serieneinbau bei kraftfahrzeugen geeignet. Das Meßsignal kann einfach und genau durch berührungsfreie Abstandsmessung gewonnen werden.

Durch die in den Unteransprüchen aufgeführten Maßnahmen sind vorteilhafte Weiterbildungen der im Hauptanspruch angegebenen Vorrichtung möglich. Insbesondere nach Anspruch 10 ist es möglich, zusätzlich noch die Längsbeschleunigung zu erfassen, die z.B. bei einem Crash-Unfall auftritt.

Zeichnung

Ausführungsbeispiele der Erfindung sind in der Zeichnung dargestellt und in der nachfolgenden Beschreibung näher erläutert. Es zeigen Figur 1 einen prinzipiellen Aufbau der Vorrichtung, Figur 2 bis 3a je eine konstruktive Ausgestaltung der Vorrichtung in perspektivischer Darstellung, Figur 4 ein Blockschaltbild der Auswerteschaltung zum Auslösen eines Überrollbügels und Figur 5 ein Diagramm, das den Verlauf der Auslöseschwelle abhängig von der Winkelgeschwindigkeit und dem Kippwinkel des Kraftfahrzeugs aufzeigt.

Beschreibung der Ausführungsbeispiele

Bei Auslösevorrichtungen für Insassenschutzvorrichtungen, z.B. bei Überrollbügel, ist es notwendig, den Lagewinkel des Fahrzeugs zum Scheinlot und die Winkelgeschwindigkeit um seine Längs- und Querachse zu bestimmen. Aus Kostengründen sollen beide Meßgrößen von nur einem Aufnehmer geliefert werden und durch eine elektronische Schaltung wieder getrennt werden.

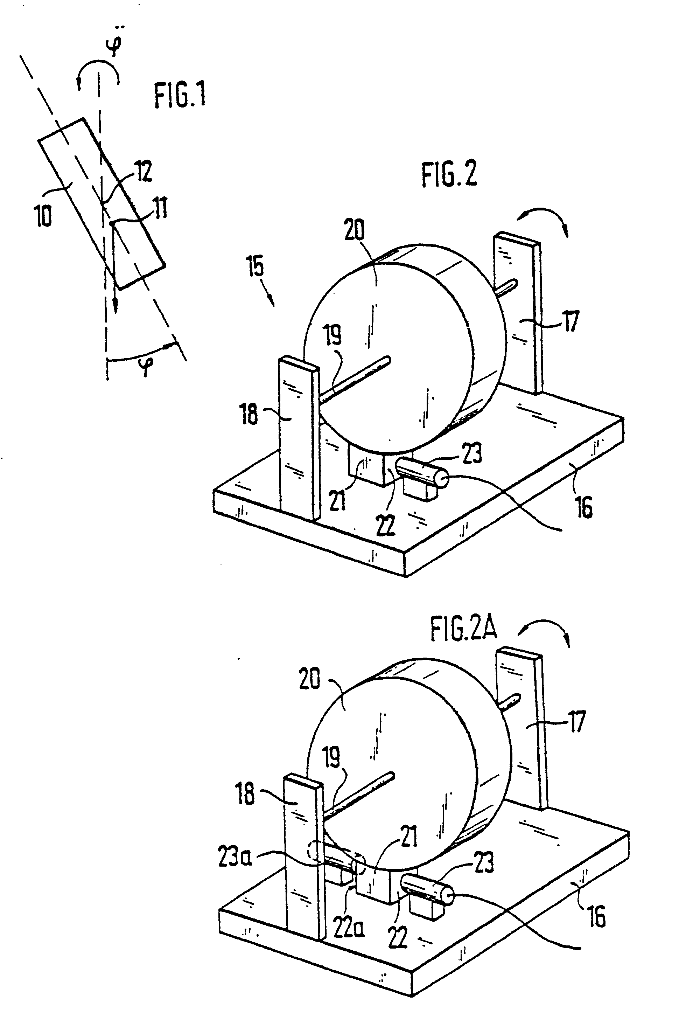

In Figur 1 ist eine schematische Darstellung eines solchen Aufnehmers gezeigt. Er besteht aus einem als seismische Masse 10 dienenden Körper, der außerhalb des Massemittelpunktes 11 elastisch in der Verankerung 12 verankert ist. Die Masse 10 und die Verankerung 12 sind dabei so gewählt, daß das Drehmoment durch das Massenträgheitsmoment der Masse bezüglich der Verankerung, in Verbindung mit der maximal zu messenden Winkelbeschleunigung die gleiche Größenordnung besitzt, wie das Drehmoment bei einer Lageänderung von 90°, das durch den außerhalb der Verankerung 12 befindlichen Masseanteil verursacht wird. Die seismische Masse 10 verursacht sowohl bei Winkelbeschleunigung als auch bei einer abweichenden Lagre zum Scheinlot ein Drehmoment in der Verankerung 12, das z.B. mit optischen oder elektrischen Mitteln gemessen werden kann.

Hierzu ist in Figur 2 ein erstes Ausführungsbeispiel dargestellt. Mit 15 ist eine Vorrichtung bezeichnet, die mit Hilfe einer Grundplatte 16 in Kraftfahrzeuge einbaubar ist. Auf der Grundplatte 1.6 sind die Füße 17, 18 einer Aufhängung angeordnet, in denen ein Torsionsstab 19 befestigt ist. Am Torsionsstab 19 ist in einer Richtung senkrecht zur Achse des Torsionsstabs 19 eine Scheibe 20 aufgehängt, die als seismische Masse für die Vorrichtung 15 dient. Statt einer Scheibe kann auch ein beliebig anders geformter Massekörper, z.B. ein Balken, aufgehängt sein. Es ist aber dann darauf zu achten, daß der Massekörper exzentrisch gelagert ist. Am Außenumfang der Scheibe 20 ist ein Fortsatz 21 ausgebildet, der als Zusatzmasse die Massen-Exzentrizität der Scheibe 20 bewirkt. Ferner hat der Fortsatz 21 eine Meßfläche 22, der ein ortsfest auf der Grundplatte 16 angeordneter Abstandssensors 23 zugeordnet ist. Als Abstandssensor 23 können alle bekannten Sensorarten zur berührungsfreien Abstandsmessung eingesetzt werden, also z.B. kapazitive, induktive, magnetische, optische oder über Wirbelstrom nessende Systeme. Der Abstandssensor 23 wird dabei so auf der Grundplatte 16 Positioniert, daß er auch die kleinen Drehbewegungen der Schreibe 20 möglichs genau erfassen kann. Selbstverständlich ist es auch möglich, den Massekörper über Spiral- oder Blattfedern federnd aufzuhängren.

Wirken bei einem Unfall Beschleunigungskräfte auf die Scheibe 20 der Vorrichtung 15 ein, so wird die Scheibe 20 aus ihrer Grundposition ausgelenkt. Es sind die beiden Fälle einer langsamen Verdrehung und einer beschleunigten Verdrehung zu unterscheiden. Bei einer langsamen Verdrehung der Scheibe 20 um die Achse des Torsionsstabs 16 führt ihre Gewichtskrait zusammen mit der ihr aber entgegenwirkenden Torsionskraft zu einer Abstandsveränderung zwischen der Meßfläche 22 und dem Abstandssensor 23. Diese Auslenkung dient nun als Maß für die Winkellage gegenüber der Horizontalen, wodurch die Lage des Kraftfahrzeugs bestimmbar ist.

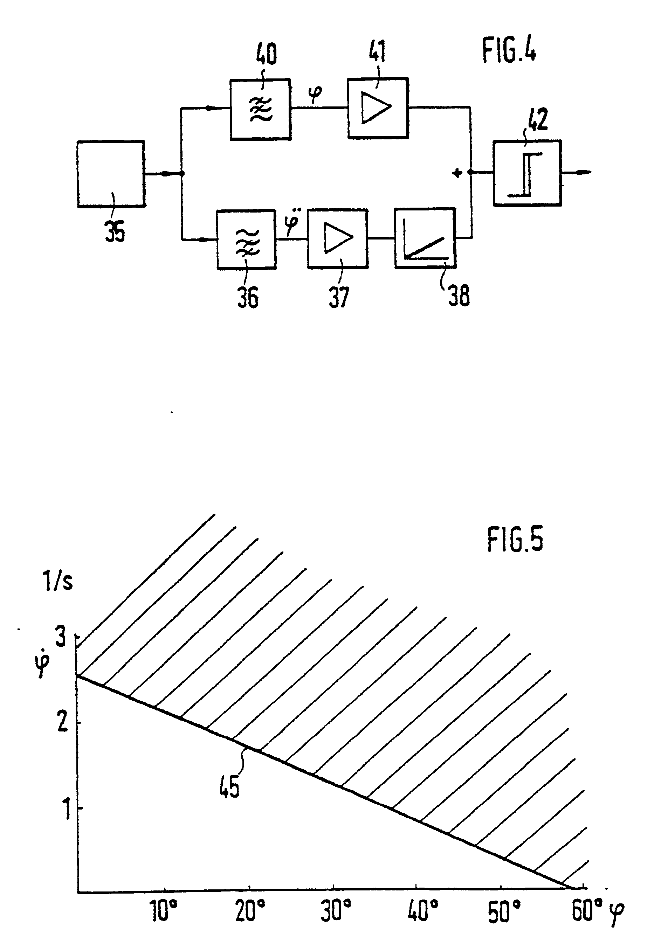

Wird die Vorrichtung 16 und insbesondere die Scheibe 20 mit dem Fortsatz 21 beschleunigend verdreht, so führt die Trägheit der Masse der Scheibe 20 und die Masse des Fortsatzes 21 ebenfalls zu einer Veränderung des Abstands zwischen der Meßfläche 22 und dem Abstandssensor 23. Über die Abstandsmessung ist ein Meßsignal für die auftretende Winkelbeschleunigung und daraus der Rotationsgeschwindigkeit des Kraftfahrzeugs erzielbar. Das gewonnene Meßsignal der Winkeländerung $\varphi$ wird in einer angeschlossenen elektronischen Auswerteschaltung in den entsprechenden Geschwindigkeits- $\dot{\varphi}$ bzw. Beschleunigungswert $\ddot{\varphi}$ differenziert. Die Weiterverarbeitung des gewonnenen Meßsignals ist mit Hilfe einer elektronischen Auswerteschaltung möglich, die in Figur 4 näher dargestellt ist.

Es ist selbstverständlich auch denkbar, die seismische Masse innerhalb der Körperform ungleichmäßig zu verteilen, un so eine exzentrische Lagerung der Masse bzw. des körpers zu erreichen. Wichtig ist es aber bei allen unterschiedlichen Formen der seismischen Masse, daß die Meßfläche und der Abstandssensor einander genau zuzuordnen sind und bereits kleinste Veränderungen möglichst fehlerfrei erfaßt werden.

Besonders vorteilhaft ist es – wie in Figur 2a dargestellt – am Fortsatz 21 diametral gegenüberliegend eine zweite Meßfläche 22a auszubilden und einen zweiten Abstandssensor 23a anzuordnen. Mit Hilfe Hilfe einer sogenannten Halbbrückenschaltung kann das Meßsignal damit verdoppelt werden. Während der Messung auftretende Störsignale oder Driften des Meßwertes, z.B. durch Tempreaturschwankungen, können ebenfalls unterdrückt werden.

Mit Hilfe der oben beschriebenen Vorrichtung ist es möglich, die Lageänderung bzw. die Winkelbeschleunigung nur bezüglich einer Achse des Kraftfahrzeugs zu bestimmen. Ordnet man eine zweite Vorrichtung senkrecht zur ersten an, so können beide Werte auch bezüglich beider Achsen gemessen werden. Beide Vorrichtungen können dabei an die gleiche Auswerteschaltung angeschlossen sein.

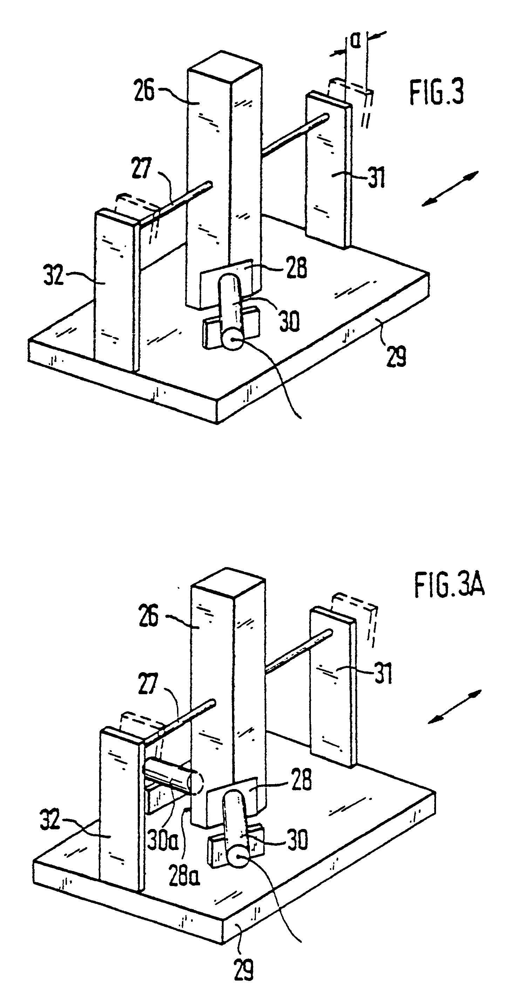

Im Ausführungsbeisbiel nach Figur 3 kann zusätzlich zur Lage und zur Rotationsbeschleunigung auch noch die Längsbeschleunigung mit einer einzigen Vorrichtung gemessen werden. Solche Längsbeschleunigungen treten z.B. bei einem Crash-Unfall auf. Wie im Ausführungsbeispiel nach Figur 2 ist eine seismische Masse, hier ein Balken 26, exzentrisch federnd an einem Torsionsstab 27 aufgehängt. Der Balken 26 weist eine unter einen bestimmten Winkel zur Achse des Torsionsstabs, z.B. 45°, angeordnete Meßfläche 28 auf, der ein ortsfest aui einer C-rundplatte 29 befestigter Abstandssensor 30 zugeordnet ist.

Die Füße 31, 32 der Vorrichtung sind im Gegensatz zum Ausführungsbeispiel nach Figur 2 in Richtung der Achse des Torsionsstabs 27 elastisch federnd ausgebildet. Die Achse des Torsionsstabs 27 ist dabei in Richtung der Fahrzeuglängsachse ausgerichtet. Bei Auftreten einer Beschleunigung bzw. Verzögerung in dieser Richtung werden die Füße 31, 32 um einen Betrag "a" ausgelenkt, was auch zu einer proportionalen Abstandsänderung zwischen der Meßfläche 28 und dem Abstandssensor 30 führt. Da sich bekanntlich ein Crash-Vorgang im zeitlichen Verlauf anders verhält als ein Überrollvorgang, kann er durch geeignete Maßnahmen mit Hilfe einer elektronischen Auswerteschaltung erkannt werden. Es ist aber auch möglich, die Meßsignale für den Crash-Vorgang und für den Überrollvorgang getrennt voneinander mit Hilfe des Ausführungsbeispiels nach Figur 3 zu gewinnen. Dazu ist in Figur 3a eine zweite Meßfläche 28a senkrecht zur Achse des Torsionsstabs 27 ausgebildet. Jeder der beiden Meßflächen 28, 28a ist dann ein eigener Abstandssensor 30, 30a zugeordnet. Die oben beschriebene schräg ausgebildete Meßfläche braucht dann nicht mehr vorhanden zu sein. Es ist nämlich möglich, die Meßflächen jeweils in Bewegungsrichtung, also in Richtung der Achse des Torsionsstabs, und senkrecht zur Achse des Torsionsstabs, auszubilden.

Wie auch beim Ausführungsbeispiel nach Figur 2a können durch diametral gegenüberliegende Meßflächen und einem jeweils zugeordneten Abstandssensor Meßfehler oder Driften kompensiert werden bzw. der Meßwert über eine sogenannte Halbbrückenschaltung verdoppelt werden.

In Figur 4 ist ein Blockschaltbild dargestellt, in dem mit 35 der oben beschriebene Aufnehmer bezeichnet ist Dessen Ausgangssignal, das einer Überlagerung von Tage und Winkelbeschleunigung entspricht, wird in die beiden Größen Winkelbeschleunigung und Lage aufgetrennt bzw. gefiltert, so daß die Fahrsituation bewertet werden kann.

Diese Filterung des Meßsignals soll an zwei Grenzfällen beschrieben werden. Überschlägt sich das Fahrzeug (Rotation) schnell, so ist die Rotationsgeschwindigkeit, d.h. die Winkelgeschwindigkeit des Kraftfahrzeugs, das wesentliche Kriterium zum Auslösen der Sicherheitsvorrichtung. Das Fahrzeug besitzt dabei eine hohe Rotationsenergie. Die schnelle Rotation des Kraftfahrzeugs wird durch eine relativ hochfrequente Winkelbeschleunigung hervorgerufen. Dies bedeutet, daß nur der hochfrequente Anteil des Meßsignals ausgewertet werden muß. Dazu wird das Meßsignal einem Hochpaßfilter 36 zugeleitet, der vom Meßsignal den hochfrequenten Anteil durchläßt und der niederfrequenten Anteil herausfiltert. Anschließend wird der hochfrequente Anteil in einem Verstärker 37 verstärkt und in einem Integrator 38 integriert. Die so gewonnene Winkelgeschwindigkeit löst bei Überschreiten einer vorgegebenen Schwelle die Sicherheitsvorrichtungen aus.

Der zweite Grenzfall ist ein langsames Überschlagen des Kraftfahrzeugs, z.B. wenn das Kraftfahrzeug entlang einer Böschung fährt und bei einem kritischen Neigungswinkel kippt. Jetzt ist die Winkelbeschleunigung gering. Das wesentliche Auslösekriterium ist nun die Lage zum Scheinlot. Das durch diese Lageänderung hervorgerufene Meßsignal ist relativ niederfrequent. Dies bedeutet, daß bei langsamer Rotation der niederfrequente Anteil des Meßsignals ausgewertet werden muß. Dazu wird das vom Sensor 35 gewonnene Meßsignal einem Tiefpaßfilter 40 zugeführt. Das so gewonnene Meßsignal wird einem Verstärker 41 zugeführt. Bei Überschreiten einer vorgegebenen Schwelle werden wieder die Insassensicherheitsvorrichtungen ausgelöst.

Im praktischen Fahrbetrieb des Kraftfahrzeugs überschneiden sich die beiden Grenzfälle. Die oben beschriebene Auslösevorrichtung ist durch einen Fensterdiskriminator 42 zu ergänzen. Beide gefilterten Meßsignale werden addiert und dem Fensterdiskriminator 42 zugeführt, der die jeweils gewünschten Sicherheitsvorrichtungen auslösen kann. In Figur 5 ist ein Diagramm für einen Überschlag des Kraftfahrzeugs um eine seiner Achsen dargestellt Dazu ist die Rotationsgeschwindigkeit des Fahrzeugs über dessen Neigungswinkel aufgetragen. Die beiden Grenzfälle sind hier als Schnittpunkte mit der y- bzw. x-Achse zu verstehen. Bei langsamem Überschlag des Kraftfahrzeugs werden die Insassenschutzvorrichtungen bei einer Schwelle von ca. 57° Neigung des Kraftfahrzeugs ausgelöst. Für einen schnellen Überschlag ist für einer ganz bestimmten Fahrzeugtyp in Figur 5 die Schelle bei einer Winkelgeschwindigkeit von 2,5 1/sec. eingezeichnet. Die im Diagramm eingezeichnete Verbindungskurve dieser beiden Grenzfälle gibt die kritische Schwelle 45 an, ab der die Sicherheitsvorrichtungen auslösen sollen. Hat das kraftfahrzeug z.B. bereits eine Neigung von 20° erreicht, so genügt eine geringere Rotationsenergie, d.h. Winkelgeschwindigkeit, um das Kraftfahrzeug in die kritische Lage, d.h. über die kritische Schelle 45 zu bringen. In diesem Beispiel würden die Sicherheitsvorrichtungen bei einer gleichzeitigen Winkelgeschwindigkeit von 1,7 1/sec. auslösen.

Auch bei einem Überschlag des Kraftfahreugs um seine Querachse kann dieselbe Auswertevorrichtung verwendet werden. Notwendige Änderungen, die durch die Geometrie des Kreftfahrzeugs bedingt sind, können bereits bei der Wahl des Sensors berücksichtigt werden.

## Ansprüche

1. Vorrichtung zum selbsttägigen Auslösen von Insassenschutzvorrichtungen in Kraftfahrzeugen bei einem Unfall, mit einem, eine außerhalb des Massemittelpunktes (11) elastisch verankerte seismische Masse (10) aufweisenden Sensor (35), der bei Abweichung von einer vorgeschriebenen Fahrsituation des Kraftfahrzeugs ein Signal abgibt, dadurch gekennzeichnet, daß die seismische Masse (10) in einer Einspannung ein Drehmoment hervorruft, so daß der Sensor (35) mindestens gleichzeitig den Lagewinkel zum Scheinlot und die Winkelbestimmungen des Kraftfahrzeugs mißt, und daß das Steuersignal des Sensors (35) mit Hilfe einer elektrischen Schaltung in mindestens zwei Bereiche aufgespalten wird.

2. Vorrichtung nach Anspruch 1, dadurch gekennzeichnet, daß das Steuersignal des Sensors (35) durch relative Lagemessung mit Hilfe einer berührungsfreien Abstandsmessung der seismischen Masse (10) zu einem Aufnehmer (23, 30) gewonnen wird.

3. Vorrichtung nach Anspruch 1 und/oder 2, dadurch gekennzeichnet, daß die Lageänderung der seismischen Masse (10) mit Hilfe eines optischen Verfahrens gewonnen wird.

4. Vorrichtung nach einem der Ansprüche 1 bis 3, dadurch gekennzeichnet, daß die Masse (10, 20) an einem Torsionsstab (19) befestigt ist.

5. Vorrichtung nach einem der Ansprüche 1 bis 3, dadurch gekennzeichnet, daß die Masse (10, 20) an einer Feder aufgehängt ist.

6. Vorrichtung nach einem der Ansprüche 1 bis 5, dadurch gekennzeichnet, daß die Masse als Scheibe (20) ausgebildet ist und einen als Meßfläche (22) dienenden Fortsatz (21) aufweist.

7. vorrichtung nach einem der Ansprüche 1 bis 6, dadurch gekennzeichnet, daß die Masse (10) als Balken (26) ausgebildet ist.

8. vorrichtung nach einem der Ansprüche 1 bis 7, dadurch gekennzeichnet, daß die Masse (10, 20) in einer Richtung beweglich gelagert ist und der Aufnehmer (23) die Bewegung der Masse in dieser Richtung bestimmt.

9. Vorrichtung nach einem der Ansprüche 1 bis 7, dadurch gekennzeichnet, daß die Masse (10) in zwei senkrecht zueinander verlaufenden Richtungen beweglich gelagert ist und der Aufnehmer (30) die Bewegung der Masse (10, 26) in beiden Richtungen bestimmt, wodurch die Längsbeschleunigung bestimmbar ist.

10. Vorrichtung nach einem der Ansprüche 1 bis 7 und 9, dadurch gekennzeichnet, daß die Meßfläche unter einem Winkel von 0 bis 90° zu einer der Bewegungsrichtungen der Masse (10, 26) angeordnet ist.

11. Vorrichtung nach Anspruch 10, dadurch gekennzeichnet, daß die Meßfläche (28) einen Winkel von 45° zu einer der Bewegungsrichtungen aufweist und der Aufnehmer (30) senkrecht zu der meßfläche (28) angeordnet ist.

12. Vorrichtung nach einem der Ansprüche 9 bis 11, dadurch gekennzeichnet, daß die Masse (10, 20, 26) in jeder der Bewegungsrichtungen eine Meßfläche aufweist, der ein eigener Aufnehmer zugeordnet ist.

13. Vorrichtung nach einem der Ansprüche 1 bis 12, dadurch gekennzeichnet, daß die masse (10, 20, 26) je zwei diametral gegenüberliegende Meßflächen mit je einem zugeordneten Aufnehmer aufweist..

14. Vorrichtung nach einem der Ansprüche 1 bis 13, dadurch gekennzeichnet, daß ein Hochpaßfilter (36) einen hochfrequenten Bereich des Steuersignals und ein Tiefpaßfilter (40) einen niederfrequenten Bereich des Steuersignals gewinnt.

15. Vorrichtung nach einen der Ansprüche 1 bis 14, dadurch gekennzeichnet, daß dem Hochpaßfilter (36) ein Integrator (38) nachgeschaltet ist und die durch die Hochpaß- (36) und Tiefpaßfilter (40) gewonnenen Bereiche des Steuersignals durch einen Verstärker (41) gewichtet, addiert und einem Komparator (42) zugeführt werden.

16. Vorrichtung nach einem der Ansprüche 1 bis 15, dadurch gekennzeichnet, daß unter Ausnützung der translatorischen Empfindlichkeit der seismischen Masse (10) nach Filterung des Steuersignals zusätzliche Schutzeinrichtungen, wie Airbag, Gurtstraffer, Zentralverriegelung und Gurtverriegelung etc. ausgelöst werden.

17. Vorrichtung nach einem der Ansprüche 1 bis 16, dadurch gekennzeichnet, daß mit Hilfe mehrerer Auslösestufen verschiedene Schutzvorrichtungen zu unterschiedlichen Zeitpunkten ausgelöst werden.

## Claims

1. Device for automatic release of passenger protection devices in motor vehicles in the event of an accident, comprising a sensor (35), which has a seismic mass (10) elastically anchored outside the midpoint (11) of the mass, and which given deviation from a prescribed driving situation of the motor vehicle transmits a signal, characterized in that the seismic mass (10) produces a torque in a clamping device, so that the sensor (35) at least simultaneously measures the position angle with respect to the apparent vertical and the angular specifications of the motor vehicle, and in that the control signal of the sensor (35) is split up with the aid of an electric circuit into at least two regions.

2. Device according to Claim 1, characterized in that the control signal of the sensor (35) is obtained by relative position measurement with the aid of contactless measurement of the distance of the seismic mass (10) from a pick-up (23, 30).

3. Device according to Claim 1 and/or 2, characterized in that the change in position of the seismic mass (10) is obtained with the aid of an optical method.

4. Device according to one of Claims 1 to 3, characterized in that the mass (10, 20) is secured to a torque rod (19).

5. Device according to one of Claims 1 to 3, characterized in that the mass (10, 20) is suspended on a spring.

6. Device according to one of Claims 1 to 5, characterized in that the mass is constructed as a disc (20) and has an extension (21) serving as measuring surface (22).

7. Device according to one of Claims 1 to 6, characterized in that the mass (10) is constructed as a beam (26)

8. Device according to one of Claims 1 to 7, characterized in that the mass (10, 20) is mounted movably in one direction, and the pick-up (23) determines the movement of the mass in this direction.

9. Device according to one of Claims 1 to 7, characterized in that the mass (10) is mounted movably in two mutually perpendicular directions, and the pick-up (30) determines the movement of the mass (10, 26) in both directions, as a result of which the longitudinal acceleration can be determined.

10. Device according to one of Claims 1 to 7 and 9, characterized in that the measuring surface is arranged at an angle of 0 to 90° with respect to one of the directions of movement of the mass (10, 26).

11. Device according to Claim 10, characterized in that the measuring surface (28) has an angle of 45° with respect to one of the directions of movement, and the pick-up (30) is arranged perpendicular to the measuring surface (28).

12. Device according to one of Claims 9 to 11, characterized in that in each of the directions of movement the mass (10, 20, 26) has a measuring surface to which there is assigned a pick-up of its own.

13. Device according to one of Claims 1 to 12, characterized in that the mass (10, 20, 26) has in each case two diametrically opposite measuring surfaces, each with an assigned pick-up.

14. Device according to one of Claims 1 to 13, characterized in that a high-pass filter (36) obtains a high-frequency range of the control signal and a low-pass filter (40) obtains a low-frequency range of the control signal.

15. Device according to one of Claims 1 to 14, characterized in that an integrator (38) is connected downstream of the high-pass filter (36), and the ranges of the control signal obtained by the high-pass filter (36) and low-pass filter (40) are weighted by an amplifier (41), added and fed to a comparator (42).

16. Device according to one of Claims 1 to 15, characterized in that by utilizing the translatory sensitivity of the seismic mass (10) additional protection devices, such as airbag, belt tightener, central locking system and belt interlock system etc. are released after filtering of the control signal.

17. Device according to one of Claims 1 to 16, characterized in that various protection devices are released at different instants with the aid of a plurality of release steps.

## Revendications

1. Dispositif de libération automatique de dispositifs de protection de passagers dans des véhicules automobiles en cas d'accident, avec un détecteur (35) comportant une masse sismique (10) ancrée élastiquement en dehors du centre (11) de cette masse, qui délivre un signal lors d'une déviation à partir d'une situation de marche prescrite du véhicule automobile, dispositif caractérisé en ce que la masse sismique (10) fait apparaître dans une fixation un couple, de sorte que le détecteur (35) mesure au moins simultanément l'angle de position par rapport à la verticale apparente et les définitions angulaires du véhicule automobile, et en ce que le signal de commande du détecteur (35) est décomposé en au moins deux parties à l'aide d'un circuit électrique.

2. Dispositif selon la revendication 1, caractérisé en ce que le signal de commande du détecteur (35) est obtenu à l'aide d'une mesure à distance, sans contact, de la position relative de la masse sismique (10) par rapport à un capteur (23, 30).

3. Dispositif selon la revendication 1 et/ou 2, caractérisé en ce que la modification de la position de la masse sismique (10) est obtenue à l'aide d'un procédé optique.

4. Dispositif selon une des revendications 1 à 3, caractérisé en ce que la masse (10, 20) est fixée à un barreau de torsion (19).

5. Dispositif selon une des revendications 1 à 3, caractérisé en ce que la masse (10, 20) est suspendue à un ressort.

6. Dispositif selon une des revendications 1 à 5, caractérisé en ce que la masse est réalisée sous la forme d'un disque (20) et comporte un appendice (21) servant de surface de mesure (22).

7. Dispositif selon une des revendications 1 à 6, caractérisé en ce que la masse (10) est réalisée sous la forme d'une poutre (26).

8. Dispositif selon une des revendications 1 à 7, caractérisé en ce que la masse (10, 20) est montée de façon à être mobile dans une direction et que le capteur (23) détermine le déplacement de la masse dans cette direction.

9. Dispositif selon une des revendications 1 à 7, caractérisé en ce que la masse (10) est montée de façon à être mobile dans deux directions s'étendant perpendiculairement l'une par rapport à l'autre et que le capteur (30) détermine le déplacement de la masse (10, 26) dans ces deux directions, grâce à quoi l'accélération longitudinale peut être déterminée.

10. Dispositif selon une des revendications 1 à 7 et 9, caractérisé en ce que la surface de mesure est disposée selon un angle de 0 à 90° par rapport à une des directions de déplacement de la masse (10, 26).

11. Dispositif selon la revendication 10, caractérisé en ce que la surface de mesure (28) est disposée selon un angle de 45° par rapport à une des directions de déplacement et que le capteur (30) est disposé perpendiculairement à la surface de mesure (28)

12. Dispositif selon une des revendications 9 à 11, caractérisé en ce que la masse (10, 20, 26) comporte dans chacune des directions de déplacement une surface de mesure associée à un capteur qui lui est propre.

13. Dispositif selon une des revendications 1 à 12, caractérisé en ce que la masse (10, 20, 26) comporte deux surfaces de mesure diamétralement opposées, à chacune desquelles est associé un capteur.

14. Dispositif selon une des revendications 1 à 13, caractérisé en ce qu'un filtre passe-haut (36) fournit une partie haute fréquence du signal de commande, tandis qu'un filtre passe-bas (40) fournit une partie basse fréquence du signal de commande.

15. Dispositif selon une des revendications 1 à 14, caractérisé en ce qu'un intégrateur (38) est branché à la suite du filtre passe-haut (36) et que les parties du signal de commande obtenues par l'intermédiaire du filtre passe-haut (36) et du filtre passe-bas (40), pondérées par un amplificateur (41), sont totalisées et amenées à un comparateur (42).

16. Dispositif selon une des revendications 1 à 15, caractérisé en ce que, en utilisant la sensibilité de répéteur de la masse sismique (10), d'autres dispositifs de protection supplémentaires sont libérés après filtrage du signal de commande, tels que sac à air, tendeur de ceinture, verrouillage central et verrouillage de ceinture.

17. Dispositif selon une des revendications 1 à 16, caractérisé en ce qu'à l'aide de plusieurs étages de libération, différents dispositifs de protection sont libérés à des instants différents.

FIG.1

FIG.2

FIG.2A

FIG.3

FIG.3A

FIG.4

FIG.5